# FASCICULE DE BREVET EUROPEEN

(11) **EP 0 713 577 B1**
(45) Date de publication et mention de la délivrance du brevet: **09.06.1999**
(21) Numéro de dépôt: 94925455.1
(22) Date de dépôt: 11.08.1994
(51) Int. Cl.: G01N 27/12

(54) **PROCEDE DE FABRICATION D'UN ELEMENT SEMI-CONDUCTEUR ET DETECTEUR DE GAZ POURVU D'UN TEL SEMI-CONDUCTEUR**
HERSTELLUNGSVERFAHREN FUR EIN HALBLEITERELEMENT UND DETEKTOR MIT EINEM SOLCHEN HALBLEITERELEMENT
PROCESS FOR MANUFACTURING A SEMICONDUCTOR ELEMENT AND GAS DETECTOR PROVIDED WITH SUCH AN ELEMENT

(30) Priorité: 13.08.1993 WO PCT/EP93/02162
(43) Date de publication de la demande: 29.05.1996
(73) Titulaire: De Haan, André, B-7000 Mons (BE)
(72) Inventeur: De Haan, André, B-7000 Mons (BE)
(74) Mandataire: Quintelier, Claude
(86) Numéro de dépôt international: EP9402698
(87) Numéro de publication internationale: WO9505595

(56) Documents cités:
- EP-A- 0 126 246
- EP-A- 0 553 452
- US-A- 4 381 922
- SENSORS AND ACTUATORS, vol.15, no.4, Décembre 1988, LAUSANNE pages 399 - 416 J.S. CAUHAPE, C. LUCAT AND C. BAYLE 'Role of the Mineral Binder in the Sensing Properties of Screen-Printed Layers of Semiconductor Oxides.'

## Description

La présente invention concerne un procédé de fabrication d'un élément formé de semi-conducteur(s) selon la revendication 1. Le préambule de la revendication 1 décrit un procédé de fabrication d'un élément formé de semi-conducteur(s) qui est destiné à un détecteur de gaz produits par combustion, suivant lequel au moins deux substances de composition différentes, dont au moins une est un semi-conducteur à l'état poudreux, sont dispersés sous forme de poudres insolubles dans un solvant, la suspension hétérogène ainsi obtenue, dans laquelle l'état de grains de la substance semi-conductrice est maintenu, est appliquée sur un substrat isolant, dont la valeur de résistivité spécifique est d'au moins 10¹² Ω cm, ledit solvant étant éliminé après application de la suspension.

Un tel procédé est connu du brevet américain n° 4.381.922. Suivant le procédé connu, on prépare un mélange de poudres semi-conductrices composé de métallo-phtalocyanines qui sont des semi-conducteurs organiques. Ces poudres sont versées dans un solvant organique afin de modifier leur structure phtalocyanine initiale. Afin de former l'élément formé de semi-conducteur(s), la suspension ainsi obtenue est appliquée sur un substrat isolant muni des contacts électriques nécessaires.

De tels éléments formés de semi-conducteurs sont utilisés dans des détecteurs de gaz de combustion, comme par exemple des détecteurs d'incendie ou des détecteurs de gaz d'échappement. En fonction du choix particulier du type de semi-conducteur ou de la substance semi-conductrice utilisée, ils peuvent être rendus particulièrement aptes à une application bien déterminée.

Un désavantage des semi-conducteurs connus est qu'ils présentent une structure cristalline moléculaire et que les liaisons intermoléculaires sont assurées par des forces de van der Waals. Dans ces conditions, au fil du temps et même à température ambiante, des liaisons peuvent s'établir entre les grains constitutifs de la poudre semi-conductrice mise en oeuvre. Il en résulte un frittage naturel et progressif des préparations. Au fil du temps, ce phénomène conduit à une diminution assez rapide de la surface spécifique du semi-conducteur ce qui a pour conséquence une durée de vie limitée des détecteurs pourvus d'un tel élément formé de semi-conducteur(s). En effet, la poudre est dissoute dans le solvant organique afin de permettre à la structure moléculaire phtalocyanine initiale d'être modifiée et d'obtenir une suspension homogène. Le caractère organique des poudres déposées mène donc à un frittage des grains de phtalocyanine qui provoque à relativement court terme une réduction de la surface spécifique. Le phénomène de frittage provoque, à température ambiante un collage de poudres ce qui réduit fortement la sensibilité de l'élément formé de semi-conducteur(s) aux agents gazeux.

L'invention a pour but de réaliser un procédé de fabrication d'un élément formé de semi-conducteur(s) destiné à un détecteur de gaz produit par combustion ayant une durée de vie plus longue sans pour autant limiter ces applications.

A cette fin, un procédé de fabrication d'un élément formé de semi-conducteur(s) suivant l'invention est caractérisé en ce que les substances ne sont pas soumises à un frittage et en ce qu'au moins une substance semi-conductrice est minérale et est formée par un oxyde métallique. Les poudres n'étant plus soumises à un frittage ni lors de la fabrication du semi-conducteur ni au cours du temps, on obtient une surface spécifique sensiblement plus élevée. La nature et la structure du semi-conducteur ne se modifient pratiquement plus. Puisque l'on utilise des substances différentes, le processus de frittage causé par le temps ne se manifeste que très faiblement, ce qui prolonge sensiblement la durée de vie du semi-conducteur ainsi réalisé. De plus, les semi-conducteurs formés par un oxyde métallique se présentent généralement sous forme de poudres déposées sans frittage, ce qui les rend tout à fait aptes pour le procédé suivant l'invention et permet une détection à température ambiante. En évitant ainsi l'apparition d'un processus de frittage, la sensibilité des capteurs n'évolue plus sensiblement au cours du temps.

Il faut noter que l'article "Role of the mineral binder in the sensing properties of screen-printed layers of semiconductor oxide Sz_{1-y} Ca_{y}FeO₃₋ₓde Cauhape et al paru dans "Sensors and Actuators" Volume 15, no.4 décembre 1988 pages 399-416 décrit un semi-conducteur destiné à détecter des gaz combustibles "sensitivity to methane" et "methane in air").

De plus, les semi-conducteurs décrits dans "Sensors et Actuators" sont tous à base d'oxydes doubles ou triples (ex: Sr_{1-y}Ca_{y}Fe₂O₃₋ₓ) obtenus par frittage d'oxydes simples (CaO, SrO, SnO₂, Fe₂O₃, etc) comme précisé dans l'introduction du document. En outre, à ces semi-conducteurs on ajoute des métaux nobles tels que le Pt, Pd, Au, qui présentent une activité catalytique vis-à-vis de la réaction de combustion dont la surface du semi-conducteur est le siège en présence d'un gaz combustible.

Les semi-conducteurs suivant "Sensors and Actuators" sont obtenus par frittage ("during sintering") et ne fonctionnent qu'à température élevée ("firing temperature 950°C", et "insentive to 1% methane in air at 470°C").

Les semi-conducteurs décrits dans "Sensors and Actuators" comportent des oxydes combinés.

Une première forme de réalisation préférentielle d'un procédé suivant l'invention est caractérisée en ce que l'on utilise une substance semi-conductrice formée par un oxyde métallique ou organique de l'un des types n et p pour former des jonctions n-p-n ou p-n-p. On obtient ainsi un élément formé de semi-conducteur(s) dont on peut modifier les caractéristiques en fonction du choix du type de semi-conducteurs et de leur association. L'usage particulier auquel le détecteur est destiné déterminera le choix des pondérations des semi-conducteurs type n, type p à utiliser.

De préférence, les substances semi-conductrices formées par un oxyde métallique sont choisies parmi l'oxyde d'étain, d'indium, de cobalt, de cuivre, d'antimoine, de germanium, de gallium, de nickel, de chrome, de zinc ou de titane et parmi les porphyrines telles que les phtalocyanines. Ces oxydes se trouvent à volonté sur le marché sous forme de poudres, ce qui les rend particulièrement aptes à l'application du procédé suivant l'invention. De plus puisqu'il n'y a pas de frittage ces éléments formés de semi-conducteurs peuvent être utilisés à température ambiante pour détecter un gaz émis par une combustion.

Une deuxième forme préférentielle de réalisation d'un procédé suivant l'invention est caractérisée en ce que l'on disperse dans ledit solvant également une substance formée d'un composé inerte choisie en outre parmi de l'alumine ou de la silice. Le composé inerte ne modifie, d'une part, pas la nature et la structure du semi-conducteur et, d'autre part, il contribue à maintenir une surface spécifique élevée ce qui limite l'effet de frittage dans le temps. Un mélange d'un semi-conducteur à l'état poudreux et d'un composé inerte s'inscrit dès lors parfaitement dans le concept de la présente invention.

De préférence, avant d'être dispersées la granulométrie des substances sous forme de poudres est réduite par broyage à un taux qui est inférieur à un taux de 100 µm. Ceci permet d'avoir une certaine uniformité dans les dimensions des grains qui évite par conséquent la formation d'agglomérat dans les mélanges et permet, dès lors, d'obtenir une surface spécifique élevée du semi-conducteur.

Une troisième forme de réalisation préférentielle d'un procédé suivant l'invention est caractérisée en ce que ladite suspension est appliquée en couches successives sur le substrat, chaque dépôt de couche étant suivie d'un séchage pour évacuer le solvant. On obtient ainsi plusieurs couches sur un même substrat, ce qui est tout bénéfice pour obtenir une surface spécifique élevée.

L'invention concerne également un détecteur de gaz selon la revendication 10, ledit capteur comprenant un élément formé de semi-conducteur(s) susceptible d'être obtenu par le procédé susdit. Un tel détecteur est monté en série avec un module d'ajustement et est relié à une unité de vérification agencée pour détecter une variation rapide de la valeur résistive de l'élément formé de semi-conducteur(s) et pour produire un signal de sortie après détection d'une telle variation. L'unité de vérification opère la sélection entre variation lente et rapide par le contrôle, après un certain retard, du module d'ajustement en faisant varier son impédance de telle sorte que la tension aux bornes de l'élément formé de semi-conducteur(s) reste sensiblement constante lors de faibles variations et ce quelle que soit l'impédance de cet élément. Ainsi , seulement la valeur relative de l'impédance de cet élément, et non pas sa valeur absolue, intervient dans la détection. La détection d'une variation rapide permet de détecter rapidement un changement de la semi-conductibilité et donc la présence d'un gaz produit par combustion, ce qui rend le détecteur très performant.

De préférence, ledit module d'ajustement comporte un transistor et un condensateur branché en parallèle, lesdits signaux d'ajustement étant fournis à la base dudit transistor. Ceci offre une solution facilement intégrable.

L'invention sera maintenant décrite plus en détail à l'aide entre autres des dessins. Dans les dessins :

La figure 1 illustre, à une échelle agrandie, un élément semi-conducteur obtenu par application du procédé suivant l'invention.

Les figures resp. 4 et 5 illustrent le changement de résistance en fonction du temps dû à la présence d'un feu avec flamme, d'un élément semi-conducteur, suivant l'invention et comprenant resp. de l'oxyde d'étain et de l'oxyde d'indium.

La figure 6 illustre la sensibilité (ρ) d'un élément semi-conducteur suivant l'invention.

La figure 7 illustre un exemple de réalisation d'un détecteur suivant l'invention.

Parmi les semi-conducteurs on distingue des semi-conducteurs de type n et de type p. Les propriétés de ces semi-conducteurs, appelés semi-conducteurs intrinsèques, sont généralement déterminées par la composition et la structure de l'oxyde métallique formant la substance semi-conductrice.

Une semi-conductivité extrinsèque peut néanmoins se manifester et dans ce cas, elle peut être déterminée par la présence de certains gaz dans l'atmosphère. Selon la nature du gaz, celui-ci agit comme un dopant en augmentant ou diminuant le nombre de porteurs de charges.

Suivant les procédés connus actuellement un ou plusieurs oxydes métalliques formant les semi-conducteurs sont utilisés soit en films minces, soit sous forme de poudre ayant subi un frittage à haute température (d'environ 800°C). Etant donné la faible valeur de la semi-conductivité de ces couches d'oxyde et les faibles surfaces spécifiques obtenues par ces techniques, les détecteurs ainsi réalisés ne peuvent être utilisés qu'à haute température, de l'ordre de 450 à 600°C, de manière à obtenir la sensibilité la plus adéquate par rapport à l'application visée. Ces détecteurs sont dès lors utilisés pour la détection de gaz combustibles comme par exemple de H₂, CO, CH₄ et autres hydrocarbures.

Dans le cas où l'on réalise un mélange de poudres, par exemple d'oxyde de baryum et d'oxyde de titane, et que l'on soumet ces poudres à une opération de frittage à haute température, deux phénomènes se produisent :
1°) Une réaction entre l'oxyde de baryum et l'oxyde de titane qui conduit à la formation de titanate de baryum;
2°) Une soudure des grains les uns aux autres par interdiffusion ce qui conduit à la formation de grains de plus grandes dimensions.

Dans ce dernier cas, la surface active n'est plus égale à la surface géométrique mais correspond à celle de la surface spécifique de la nouvelle structure formée, en l'occurrence celle du titanate de baryum.

Toutefois cette surface spécifique est nettement inférieure à celle présentée au départ par les poudres utilisées puisqu'elles ont subi un frittage et se sont de la sorte soudées les unes aux autres par interpénétration de leur réseau cristallin.

Une autre technique utilisée pour fabriquer un élément semi-conducteur est l'évaporation sous vide. Par cette technique, on obtient un film semi-conducteur dont la surface active correspond strictement à la surface apparente. Ceci signifie que si par exemple, on dépose un film d'oxyde d'étain, le film obtenu présente une surface active strictement égale à celle de sa surface géométrique.

Pour détecter des gaz produits par une combustion on utilise en général des semi-conducteurs organiques de la famille des porphyrines comme par exemple de la tetrabenzoporphyrine et de la phtalocyanine métallique. Dans la plupart des cas, il s'agit d'une semi-conductivité extrinsèque puisqu'elle est conditionnée par le caractère donneur ou accepteur des molécules de gaz présentés dans l'atmosphère.

Il faut toutefois noter qu'aucun des semi-conducteurs de nature minérale ne semble avoir été utilisé à température ambiante pour la détection de gaz présents dans l'atmosphère. La littérature décrit même qu'ils ne peuvent être utilisés dans ces conditions. La raison de ce rejet est sans nul doute inhérente aux techniques de fabrication et au traitement électronique de l'information fournie par le détecteur.

L'utilisation d'une seule substance semi-conductrice sans la présence d'autres substances pour former un élément semi-conducteur pose également un problème. En effet, au cours du temps la substance semi-conductrice peut subir un collage progressif. Le collage des grains les uns aux autres provoque une diminution de la surface active et donc de la sensibilité au détecteur.

Pour permettre d'utiliser le détecteur, pourvu d'un élément semi-conducteur, à température ambiante et pour éviter le processus de frittage, la présente invention propose un procédé de fabrication d'un élément semi-conducteur où on utilise au moins deux substances différentes sous forme de poudre insoluble. Au moins une de ces substances doit impérativement être un semi-conducteur formé par un oxyde métallique alors que l'autre peut être formé d'une composé inerte ou un autre semi-conducteur différent du premier. Les poudres ne sont soumises à aucun frittage afin précisément d'éviter de modifier la nature et la structure des substances semi-conductrices.

Les poudres utilisées sont de préférence broyées avant de les appliquer sur un substrat isolant, dont la valeur résistivité spécifique est d'au moins 10¹²Ω cm et dont la résistance n'évolue pas avec les facteurs ambiants. Les poudres sont broyées afin d'obtenir une granulométrie dont le taux est inférieur à 100 µm. Le broyage permet en outre que les dimensions des grains soient les plus proches possible les unes des autres.

Les poudres sont ensuite dispersées dans un solvant, comme par exemple de l'eau, de l'éthanol, de l'acétone ou un mélange de ces solvants. De préférence la suspension poudres-solvant est soumise à une vive agitation de manière à réaliser une suspension hétérogène où les différentes substances se sont bien mélangées et réparties au hasard dans le solvant. On évite ainsi une ségrégation ou sédimentation préférentielle. De plus ceci permet de réduire sensiblement la probabilité que deux grains d'une même substance se déposent ultérieurement l'une à côté de l'autre sur le substrat.

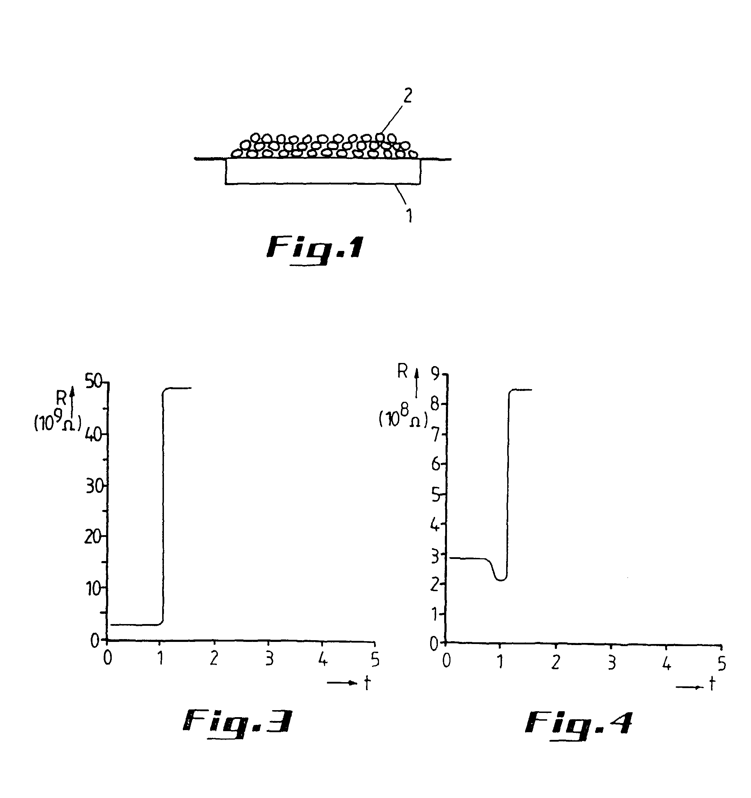

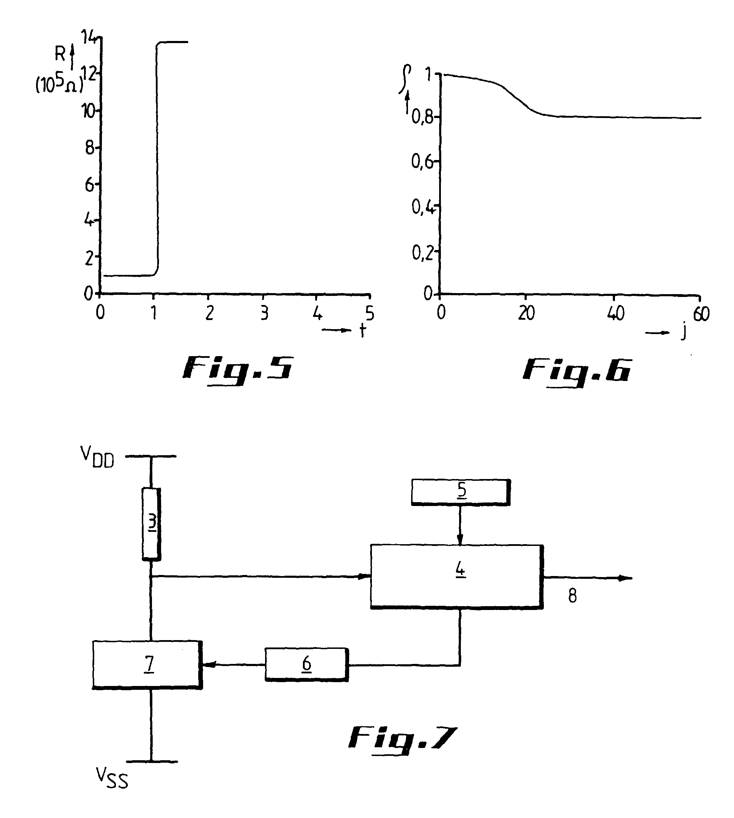

La suspension ainsi obtenue est alors déposée sur le substrat 1 de telle façon que ce soit les grains 2 mêmes, que l'on dépose, comme illustré à la figure 1. Le dépôt même se fait par exemple par sérigraphie, peinture, électrophorèse ou par simple immersion du substrat dans la suspension. De préférence on applique la suspension en couches successives sur le substrat, chaque dépôt de couche étant suivi d'un séchage pour permettre d'évacuer le solvant. Le séchage est par exemple réalisé à l'aide d'air chaud et permet d'obtenir une meilleure adhérence de la poudre déposée.

L'adhérence des couches est obtenue par l'insertion des poudres dans les cavités dues à la rugosité du substrat utilisé et par une forme de collage des poudres entre elles. Les substrats utilisés sont par exemple formés par des plaquettes d'alumine frittée ou de silicium oxydé.

Pour permettre de connecter l'élément semi-conducteur ainsi obtenu à une source de tension électrique on dépose sur le substrat isolant, par exemple par sérigraphie en couche épaisse deux électrodes. Ces électrodes sont par exemple obtenues à partir de pâtes constituées soit par des alliages argent-palladium, soit par de l'or ou un autre métal noble, ce qui a l'avantage d'éviter des phénomènes de corrosion ou de dopage ultérieur des poudres semi-conductrices.

Dans le cas où l'on souhaite améliorer la qualité de l'adhérence des poudres sur les supports, on peut les recouvrir par un composé inerte, isolant et poreux tel que, par exemple, une couche de plâtre, de zéolithe, ou une membrane poreuse telle du collodion (mélange de tetranitro et trinitro cellulose) ou encore une mousse composée par un polymère organique à porosité ouverte.

La composition, la granulométrie et la nature des composants intervenant dans le mélange de la couche sensible est très importante. Elle conditionne, en effet, la résistance de base des capteurs, la nature de leur réponse, leur sensibilité et leur durée de vie.

La résistance de base des capteurs dépend de la résistance de chacun des composants pris isolément et de leurs interactions mutuelles.

Ainsi, des capteurs réalisés avec les composants purs présentent les résistances suivantes :

| | |
|---|---|
| Phtalocyanine de cuivre | 10⁹ à 10¹⁰ Ω |
| Oxyde d'Indium In₂O₃ | env. 4.10⁴ Ω |
| Dioxyde d'étain SnO₂ | env. 10⁸ Ω |
| Silice SiO₂ | isolant |
| Alumine Al₂O₃ | isolant |

La valeur de la résistance de base conditionne l'importance de la réponse obtenue par le détecteur pourvu de l'élément semi-conducteur. Plus la résistance sera élevée, plus importante sera la variation (ΔR) du signal obtenu.

Un élément semi-conducteur de type n est fabriqué en utilisant un oxyde métallique comme par exemple de l'oxyde d'étain (SnO₂), d'indium (In₂O₃), de cobalt (Co₂O₃), d'antimoine (Sb₂O₃), de germanium (GeO₂), de gallium (Ga₂O₃), ou de tantale (Ta₂O₃), de fer Fe₂O₃, de tungstène (WO₃), de zinc (ZnO) ou de titane (TiO₂).

Etant donné que ces poudres présentent une semi-conductivité du type n la présence d'un gaz accepteur provoque une diminution du nombre de porteurs de charge négatifs et donc une augmentation de la résistance du capteur.

Ce type de comportement peut être observé sur les figures 4 (SnO₂) et 5 (In₂O₃) lors d'une combustion vive, comme par exemple de papier avec flammes. On constate que dans le cas de ces deux détecteurs soumis au même foyer, la résistance globale des capteurs augmente fortement lors de la combustion.

II faut toutefois remarquer la résistance du détecteur réalisé avec la poudre d'oxyde d'étain (figure 4) a commencé par diminuer avant d'augmenter.

Ce type de comportement montre bien que le niveau de Fermi de chaque poudre semi-conductrice lui est propre. Par conséquent, un gaz donné produit dans une chaîne d'oxydation et présentant un comportement donneur vis-à-vis par exemple de l'oxyde d'étain peut à l'inverse présenter un comportement accepteur pour un capteur à base d'oxyde de titane.

Ceci peut s'expliquer par le fait que les gaz produits lors de la combustion d'un composé aussi simple que le méthane passent par un ensemble d'étapes intermédiaires.

Ainsi, on obtient dans ce cas :

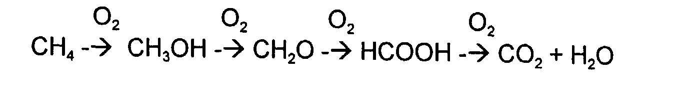

Selon que la combustion est vive ou ménagée, l'oxydation est complète ou s'arrête à l'un des stades intermédiaires.

Il en résulte que selon le niveau de Fermi de l'élément semi-conducteur utilisé, l'un de ces gaz, par exemple dans le cas choisi la formaldéhyde CH₂O peut manifester ou non un caractère donneur.

Ceci signifie que, dans l'exemple précité, les gaz ont toujours présenté un caractère accepteur vis-à-vis de l'oxyde de indium, mais pas vis-à-vis de l'oxyde d'étain qui lui a ressenti pendant quelques instants un effet donneur.

Ce fait est extrêmement important car le mélange de ces poudres qui s'applique lors du procédé suivant l'invention, va précisément permettre de régler le niveau à partir duquel le détecteur va réagir avec un comportement donneur ou accepteur. Selon l'application visée, le choix et la pondération des poudres semi-conductrices utilisées sont adaptés afin d'obtenir la réponse souhaitée.

Ainsi, certains détecteurs destinés, par exemple, à la détection d'incendie seront constitués à partir d'un mélange de poudres semi-conductrices du type n, mais si l'on souhaite diminuer l'action de certains agents on peut y adjoindre un peu de semi-conducteur du type p. De tels ajouts peuvent se justifier notamment pour éviter des fausses alarmes dues par exemple à la présence dans l'atmosphère d'un gaz tel que l'ammoniaque qui se trouve par exemple dans certains produits de nettoyage.

En outre, le mélange de poudres semi-conductrices du type n et du type p crée au contact des grains des jonctions p-n, n-p-n et p-n-p qui modifient fortement les réponses obtenues tant sur le plan de l'importance des réponses que dans leur nature.

La durée de vie des capteurs dépend essentiellement du maintien dans le temps de la surface spécifique des poudres utilisées. En effet, au cours du temps, l'effet de léger collage qui existe entre les grains peut progresser par une légère interdiffusion due soit à la présence côte à côte de deux grains de même nature, soit à l'action d'un gaz fortement réactif (NOₓ, SO₃,...) soit à l'action de la tension imposée à ses bornes. Ce collage plus important modifie la surface spécifique des poudres et donc diminue l'importance de leur réponse. On y remédie en augmentant au maximum le nombre des substances différentes présentes dans l'élément semi-conducteur. En effet, lorsque les grains qui se côtoient ne sont pas de même nature, le risque de voir le collage progresser diminue fortement.

Le caractère hétérogène de la suspension appliqué sur le substrat suivant l'invention contribue également à sensiblement réduire cet effet de frittage dans le temps. L'utilisation de grains de poudre de différentes substances réduit l'interaction entre ses substances. Pour cette même raison, on introduit également dans le mélange des poudres constituées de matières inertes sur le plan chimique et électrique telles que de la silice, de l'alumine ou du talc. L'introduction de ces poudres inertes dans le mélange empêche donc le collage de se poursuivre au fil des mois et permet de maintenir la sensibilité (ρ) des capteurs, comme illustré à la figure 6 où le temps (t) est exprimé en jours. Ces poudres inertes ont un caractère d'isolant électrique et par conséquent leur introduction dans le mélange augmente la résistance électrique aux bornes du capteur. De nouveau, les proportions et la granulométrie des poudres mises en oeuvre doivent être choisies avec soin.

Les détecteurs comprenant un élément semi-conducteur suivant l'invention peuvent être utilisés dans différentes applications où il s'agit de déceler l'apparition soudaine d'un constituant gazeux particulier dans l'atmosphère. C'est notamment le cas dans le cadre de la détection d'incendie car ces détecteurs permettent la détection de tous les types de feux normalisés.

Puisque les détecteurs fonctionnent à température ambiante, il n'est pas nécessaire de les chauffer, ce qui réduit considérablement leur consommation d'énergie, puisque la puissance de l'ensemble est de l'ordre de 0,2 mW.

Par rapport à l'utilisation de détecteurs qui utiliseraient uniquement un semi-conducteur du type p, l'apport est également très important, puisque ceux-ci ne pourraient pas être utilisés pour répondre aux normes en vigueur. En effet, les chambres de combustion utilisées par les organismes qui effectuent ces normalisations ont déjà été utilisées pour effectuer un très grand nombre de feux. Il en résulte que ces chambres sont couvertes de suies et sentent par conséquent très fort la fumée. Cette odeur est due à des émanations de gaz qui correspondent à des fumées froides et donc à des gaz réducteurs.

Les semi-conducteurs du type p (par exemple la phtalocyanine) présentent une résistance qui augmente très fortement en présence de tels gaz. Cette augmentation est tellement importante (R > 10¹¹ Ω) que les électroniques habituelles ne sont plus capables d'y répondre et qu'elles passent en alarme dès leur introduction dans la chambre.

La situation est complètement différente avec un élément semi-conducteur du type n suivant l'invention, puisque les résistances diminuent lorsqu'elles y sont introduites et que par conséquent elles sont encore plus aisément mesurables.

Des capteurs analogues et l'électronique décrite conviennent également pour la détection de gaz de combustion ou de certains gaz nocifs qui surviennent dans l'atmosphère par exemple lors d'une pollution.

C'est la raison pour laquelle ils peuvent parfaitement convenir pour la régulation automatique des ventilations en général. Parmi celles-ci, on peut notamment citer :
- la régulation de l'admission d'air extérieur dans les habitacles des véhicules automobiles,
- la régulation de la ventilation dans les toilettes,
- la régulation de la ventilation dans les parkings et tunnels,
- la détection de fuites de gaz nocifs tels que le chlore Cl₂,
l'acide chlorhydrique HCI, l'acide cyanhydrique HCN, l'acide sulfhydrique H₂S, les oxydes d'azote NOₓ, les oxydes de soufre SOₓ, l'ammoniac NH₃, les acides organiques (formiques, acétiques, etc...), etc...

Le fait qu'ils sont susceptibles de déceler la présence de gaz tels que la triméthyl amine permettrait également de les utiliser par exemple pour indiquer l'état de fraîcheur du poisson. En effet, dans ce cas, des émanations de triméthyl amine sont perçues.

De même, leur sensibilité à l'acide sulfhydrique H₂S, montre qu'ils peuvent déceler la présence de groupement -SH, c'est à dire de mercaptans. Ils pourraient par conséquent être notamment utilisés pour la détection de la présence de truffes.

Enfin, le fait que ces détecteurs présentent des réponses différentes suivant la nature des gaz de combustion permet de les utiliser dans le cadre de la régulation de brûleurs ou de moteurs à combustion interne.

La figure 7 illustre un exemple de réalisation d'un détecteur suivant l'invention. Le détecteur comporte l'élément semi-conducteur 3, représenté par une résistance, monté en série avec un module 7 d'ajustement. La liaison entre l'élément 3 et le module 7 est reliée à une unité 4 de vérification et de gestion dont une entrée est reliée à un générateur 5 d'un signal de référence. Une sortie de l'unité 4 est reliée via un élément retardataire 6 à une entrée de contrôle du module d'ajustement 7.

Le module d'ajustement sert à compenser de faibles variations dans le temps de la résistance de l'élément 3 semi-conducteur. Par contre une variation rapide de la valeur résistive de l'élément semi-conducteur est détecté par l'unité 4 et provoque la production d'un signal de sortie, présentée à la sortie 8 de l'unité. Le module d'ajustement est par exemple formé par une résistance variable ou un transistor bipolaire ou FET ou une autre impédance, afin de maintenir la tension aux bornes de l'élément semi-conducteur sensiblement constante.

Lorsque la tension aux bornes de l'élément 3 semi-conducteur diminue resp. augmente légèrement dû à une diminution resp. une augmentation de la valeur résistive, ce changement est détecté par l'unité 4. En fonction d'une diminution resp. une augmentation, l'unité va produire un premier resp. un second signal d'ajustement qui sera présenté au module d'ajustement. Sous contrôle du premier resp. du second signal d'ajustement l'impédance du module 7 sera augmentée resp. diminuée afin de maintenir l'ensemble de l'impédance formé par l'élément 3 et le module 7 sensiblement constant. Le signal d'ajustement est transmis avec un retard T au module 7, imposé par l'élément retardataire 6.

L'unité de vérification et de contrôle peut être fournie par un amplificateur opérationnel dont une entrée est reliée à une source de tension de référence et la sortie à un pont de résistance, lui-même relié à un circuit comprenant une résistance de charge et une de décharge reliée chacune à une diode. Suivant une variante le pont de résistance est reliée à deux diodes tête-bêches, qui utilisées dans leur zone à courant constant permettent une charge et décharge d'un condensateur.

De préférence, le module d'ajustement est formé par un transistor et un condensateur branchés en parallèle avec l'émetteur et le collecteur du transistor.

L'unité de vérification et de contrôle peut également être fournie par un microprocesseur agencé pour produire lesdits signaux d'ajustement. Entre l'élément semi-conducteur et le microprocesseur est alors branché un convertisseur analogue numérique.

## Revendications

1. Procédé de fabrication d'un élément formé de semi-conducteur(s), destiné à un détecteur de gaz produit par combustion, suivant lequel au moins deux substances de composition différentes, dont au moins une est un semi-conducteur à l'état poudreux, sont dispersés sous forme de poudres insolubles dans un solvant, la suspension hétérogène ainsi obtenue, dans laquelle l'état de grains de la substance semi-conductrice est maintenu, est appliquée sur un substrat isolant, dont la valeur de résistivité spécifique est d'au moins 10¹² Ω cm, ledit solvant étant éliminé après application de la suspension, caractérisé en ce que les substances ne sont pas soumises à un frittage et en ce qu'au moins une substance semi-conductrice est minérale et formée par un oxyde métallique.

2. Procédé de fabrication d'un élément formé de semi-conducteur(s) suivant la revendication 1, caractérisé en ce qu'en plus d'une substance semi-conductrice formée par un oxyde métallique, au moins une substance semi-conductrice organique est appliquée.

3. Procédé de fabrication d'un élément formé de semi-conducteur(s) suivant l'une des revendications 1 ou 2, caractérisé en ce que l'on utilise une substance semi-conductrice formée par un oxyde métallique ou organique de l'un des types n et p pour former des jonctions n-p-n ou p-n-p.

4. Procédé de fabrication d'un élément formé de semi-conducteur (s) suivant l'une des revendications 1 à 3, caractérisé en ce que les substances semi-conductrices minérales formées par un oxyde métallique sont choisies parmi l'oxyde d'étain, d'indium, de cobalt, de cuivre, d'antimoine, de germanium, de gallium, de nickel, de chrome, de zinc ou de titane.

5. Procédé de fabrication d'un élément formé de semi-conducteur(s) suivant l'une des revendications 1 à 4, caractérisé en ce que l'on disperse dans ledit solvant également une substance formée d'un composé inerte choisie en outre parmi de l'alumine ou de la silice.

6. Procédé de fabrication d'un élément formé de semi-conducteur(s) suivant l'une des revendications 3 et 5, caractérisé en ce que la proportion de semi-conducteurs de type n, de type p, et de substances formées d'un composé inerte est préalablement déterminée.

7. Procédé de fabrication d'un élément formé de semi-conducteur(s) suivant l'une des revendications 1 à 6, caractérisé en ce qu'avant d'être dispersées la granulométrie des substances sous forme de poudres est réduite par broyage à un taux qui est inférieur à un taux de 100 µm puis les substances sous forme de poudres sont introduites dans un solvant pour réaliser une suspension.

8. Procédé de fabrication d'un élément formé de semi-conducteur(s) suivant l'une des revendications 1 à 7, caractérisé en ce qu'après dispersion des substances semi-conductrices dans le solvant la suspension ainsi obtenue est soumise à une vive agitation.

9. Procédé de fabrication d'un élément formé de semi-conducteur (s) suivant l'une des revendications 1 à 8, caractérisé en ce que ladite suspension est appliquée en couches successives sur le substrat, chaque dépôt de couche étant suivi d'un séchage pour évacuer le solvant.

10. Détecteur de gaz de combustion, caractérisé en ce qu'il comprend un élément formé de semi-conducteur(s) (3) susceptible d'être obtenu par le procédé suivant l'une des revendications 1 à 9, ledit élément formé de semi-conducteur(s) (3) est monté en série avec un module d'ajustement (7) et est relié à une unité de vérification (4) agencée pour détecter la vitesse de variation de la valeur résistive de l'élément formé de semi-conducteur(s) et pour produire un signal de sortie après détection d'une vitesse de variation supérieure à un seuil fixé.

11. Détecteur de gaz suivant la revendication 10, caractérisé en ce que ledit module d'ajustement (7) comporte un transistor et un condensateur branché en parallèle, lesdits signaux d'ajustement étant fournis à la base dudit transistor.

12. Détecteur de gaz suivant la revendication 10 ou 11, caractérisé en ce que l'unité de vérification (4) comporte un microprocesseur agencé pour produire lesdits signaux d'ajustement en fonction de la tension mesurée aux bornes de l'élément formé de semi-conducteur(s).

## Patentansprüche

1. Verfahren zum Herstellen eines aus einem (mehreren) Halbleiter(n) gebildeten Elementes für einen Detektor von Verbrennungsgasen, demgemäß mindestens zwei Stoffe verschiedenartiger Zusammensetzung, von denen mindestens einer ein pulverförmiger Halbleiter ist, in Form von unlöslichen Pulvern in einem Lösungsmittel verteilt werden, wobei die so erzielte heterogene Suspension, in welcher der Körnerzustand des Halbleiters aufrechterhalten wird, auf ein isolierendes Substrat aufgebracht wird, dessen spezifischer Widerstand mindestens 10¹² Ω cm beträgt und wobei das Lösungsmittel nach dem Aufbringen der Suspension eliminiert wird,
dadurch gekennzeichnet, daß die Stoffe nicht gesintert werden und, daß es sich bei mindestens einem Halbleiterstoff um ein Mineral handelt, welches aus einem Metalloxyd besteht.

2. Verfahren zum Herstellen eines aus einem (mehreren) Halbleiter(n) gebildeten Elementes gemäß Anspruch 1,
dadurch gekennzeichnet, daß neben einem aus einem Metalloxyd gebildeten Halbleiterstoff, mindestens ein organischer Halbleiterstoff eingesetzt wird.

3. Verfahren zum Herstellen eines aus einem (mehreren) Halbleiter(n) gebildeten Elementes gemäß Anspruch 1 oder 2,
dadurch gekennzeichnet, daß man einen Halbleiterstoff verwendet, der aus einem Metalloxyd oder einem organischen Halbleiter des Typs n und p gebildet wird, um n-p-n oder p-n-p Übergänge zu bilden.

4. Verfahren zum Herstellen eines aus einem (mehreren) Halbleiter(n) gebildeten Elementes gemäß einem der Ansprüche 1 bis 3,
dadurch gekennzeichnet, daß die durch ein Metalloxyd gebildeten mineralischen Halbleiterstoffe unter den Oxyden folgender Metalle gewählt werden: Zinn, Indium, Kobalt, Kupfer, Antimon, Germanium, Gallium, Nickel, Chrom, Zink oder Titan.

5. Verfahren zum Herstellen eines aus einem (mehreren) Halbleiter(n) gebildeten Elementes gemäß einem der Ansprüche 1 bis 4,
dadurch gekennzeichnet, daß im Lösungsmittel ebenfalls ein Stoff verteilt wird, der aus einer inerten Zusammensetzung besteht, welche zwischen Aluminiumoxyd oder Kieselerde gewählt wird.

6. Verfahren zum Herstellen eines aus einem (mehreren) Halbleiter(n) gebildeten Elementes gemäß einem der Ansprüche 3 und 5.
dadurch gekennzeichnet, daß der Anteil an Halbleitern des Typs n, des Typs p und an Stoffen, die aus einer inerten Zusammensetzung gebildet sind, im voraus festgelegt ist.

7. Verfahren zum Herstellen eines aus einem (mehreren) Halbleiter(n) gebildeten Elementes gemäß einem der Ansprüche 1 bis 6,
dadurch gekennzeichnet, daß vor ihrer Verteilung, die Granulometrie der pulverförmigen Stoffe durch Mahlen auf weniger als 100 µm verringert wird, wonach die pulverförmigen Stoffe in ein Lösungsmittel eingebracht werden, um eine Suspension herzustellen.

8. Verfahren zum Herstellen eines aus einem (mehreren) Halbleiter(n) gebildeten Elementes gemäß einem der Ansprüche 1 bis 7,
dadurch gekennzeichnet, daß nach Dispersion der Halbleiterstoffe im Lösungsmittel, die so erhaltene Suspension kräftig gerührt wird.

9. Verfahren zum Herstellen eines aus einem (mehreren) Halbleiter(n) gebildeten Elementes gemäß einem der Ansprüche 1 bis 8,
dadurch gekennzeichnet, daß die Suspension in aufeinanderfolgenden Schichten auf das Substrat aufgebracht wird, wobei nach der Aufbringung jeder Schicht eine Trocknungsphase folgt, um das Lösungsmittel zu entfernen.

10. Detektor von Verbrennungsgasen,
dadurch gekennzeichnet, daß er ein Element umfaßt, welches aus einem (mehreren) Halbleiter(n) (3) gebildet ist und welches durch eines der Verfahren nach einem der Ansprüche 1 bis 9 hergestellt wird, wobei dieses aus einem (mehreren) Halbleiter(n) (3) gebildete Element in Reihe mit einem Einstellungsmodul (7) angebracht wird und mit einer Prüfeinheit (4) verbunden ist, die so ausgebildet ist, daß sie die Änderungsgeschwindigkeit des Widerstandswertes des durch einen (mehreren) Halbleiter(n) gebildeten Elementes erfassen kann und um ein Ausgangssignal zu erzeugen, wenn eine Änderungsgeschwindigkeit über einem vorgegebenen Schwellwert festgestellt wird.

11. Gasdetektor gemäß Anspruch 10,
dadurch gekennzeichnet, daß das Einstellungsmodul (7) einen Transistor und einen Kondensator umfaßt, die parallel geschaltet sind, wobei die Einstellungssignale an der Basis des Transistors bereitgestellt werden.

12. Gasdetektor gemäß Anspruch 10 oder 11,
dadurch gekennzeichnet, daß die Prüfeinheit (4) einen Mikropozessor umfaßt, der die Einstellungssignale in Abhängigkeit von der Spannung erzeugt, die an den Klemmen des aus einem (mehreren) Halbleiter(n) gebildeten Elementes gemessen wird.

## Claims

1. A method for manufacturing a semiconductor element, destined to a detector for a gas produced by combustion, according to which at least two substances of different composition, at least one being a semiconductor in the powder state, are dispersed in a state of insoluble powder in a solvent, the heterogeneous suspension thus obtained, where the powder particle state of the semiconductor substance is maintained, is applied on an insulating substrate, whereof the specific resistivity value is of at least 10¹² Ω cm, said solvent being eliminated after application of the suspension, characterised in that the substances are not submitted to a sintering and in that at least one semiconductor substance is a mineral and formed by a metallic oxide.

2. A method for manufacturing a semiconductor element according to claim 1, characterised in that in addition to a semiconductor substance formed by a metallic oxide, at least one organic semiconductor substance is applied.

3. A method for manufacturing a semiconductor element according to one of the claims 1 or 2, characterised in that use is made of a semiconductor substance formed by a metallic organic oxide of one of the types n and p for forming n-p-n or p-n-p junctions.

4. A method for manufacturing a semiconductor element according to one of the claims 1 to 3, characterised in that the mineral semiconductor substances, formed by metallic oxide, are chosen amongst tin oxide, indium oxide, cobalt oxide, copper oxide, antimony oxide, germanium oxide, gallium oxide, nickel oxide, chrome oxide, zinc oxide or titanium oxide.

5. A method for manufacturing a semiconductor element according to one of the claims 1 to 4, characterised in that a substance formed of an inert compound chosen amongst others from alumina or silica is also dispersed in said solvent.

6. A method for manufacturing a semiconductor element according to one of the claims 3 and 5, characterised in that the weighing of semiconductors of type n, type p, and the substances formed by inert compounds, is determined beforehand.

7. A method for manufacturing a semiconductor element according to one of the claims 1 to 6, characterised in that before being dispersed the size grading of the powder substances is reduced by grinding to a ratio inferior to a ratio of 100 µm and thereafter the powder substances are introduced in a solvent for realising a suspension.

8. A method for manufacturing a semiconductor element according to one of the claims 1 to 7, characterised in that, after dispersion of the semiconductor substances in the solvent, the suspension thus obtained is submitted to an intense agitation.

9. A method for manufacturing a semiconductor element according to one of the claims 1 to 8, characterised in that said suspension is applied in successive layers on the substrate, each applied layer being followed by a drying to evacuate the solvent.

10. A combustion gas detector, characterised in that it comprises a semiconductor element susceptible to be obtained by the method according to one of the claims 1 to 9, said semiconductor element (3) is serially mounted with an adjustment module (7) and is connected to a verification unit (4) provided for detecting the variation speed of the resistivity value of the semiconductor element and for generating an output signal after detection of a variation speed higher than a fixed threshold.

11. A gas detector according to claim 10, characterised in that said adjustment module (7) comprises a transistor and a capacitor connected in parallel, said adjustment signals being provided at the base of the transistor.

12. A gas detector according to claims 10 or 11, characterised in that the verification unit (4) comprises a microprocessor provided for generating said adjustment signals according to the voltage measured at the terminals of the semiconductor element.
